# EUROPEAN PATENT APPLICATION

(11) **EP 4 478 025 A1**
(43) Date of publication of application: **18.12.2024**
(21) Application number: 23752887.2
(22) Date of filing: 08.02.2023
(51) Int. Cl.: G01N 3/18, G01N 3/08, G01N 21/23

(54) **STRETCH TESTING DEVICE**

(30) Priority: 08.02.2022 JP 2022018329; 04.08.2022 JP 2022124700
(71) Applicant: Ever Sokki Co., Ltd., Inagi-shi, Tokyo 206-0812 (JP)
(72) Inventor: EGOSHI, Kentaro, Inagi-shi, Tokyo 206-0812 (JP)
(74) Representative: Wittmann, Günther
(86) International application number: PCT/JP2023/004149
(87) International publication number: WO 2023/153423

(57) **Abstract**

This invention is to provide a stretching test apparatus and a stretching test method capable of quickly bringing the specimen (where the specimen is stretched) to test temperature when the specimen is to be exchanged. The stretching test apparatus 1 has: an enclosure 2; at least one heating tank 5 provided inside the enclosure 2; a pull-out unit 3 that can be inserted into and removed from the enclosure 2; a specimen stretching section 4 provided inside the pull-out unit 3 that can stretch a specimen T held by a plurality of chuck portions 43 and gripping portions 45; a test space TS in the enclosure 2 in which the specimen stretching section 4 is positioned and the specimen T is stretched when the pull-out unit 3 is in the storage position P in the enclosure 2, In this way, it is possible to ensure a state where the heating space and the test space TS are not communicated with each other when the pull-out unit 3 is in the take-out position Q outside the enclosure 2.

## Description

### Technical Field

This invention relates to a stretching test apparatus, and more particularly to a stretching test apparatus for stretching a specimen such as a resin film in a uniaxial or biaxial direction at a predetermined temperature to evaluate the characteristics of the specimen.

### Background Technology

Resin films are used in a wide range of fields, including packaging, general merchandise, agriculture, industry, food, medicine, and optics. Resin films are sometimes biaxially oriented to add functionality, for example, to improve elasticity, fragility resistance, water vapor permeability, or optical anisotropy.

In recent years, biaxially oriented films have been subject to various challenges, such as breakage during stretching, loss of polarization accuracy, and non-uniform orientation, as the demand for formability and quality has become more stringent due to the diversification of applications, weight reduction, and higher functionality. Since the properties of resin film will change depending on the degree of stretching, it is necessary to properly understand the relationship between the change in resin film properties and the degree of stretching in order to solve these problems.

In order to properly understand the relationship between the change in properties of the resin film and the degree of stretching, it is necessary to properly understand not only the properties of the resin film after stretching, but also what kind of property changes are occurring in the resin film in the stretching process. In other words, it is necessary to properly evaluate the characteristics of the resin film in-situ during stretching.

As a stretching test apparatus capable of evaluating the characteristics of resin film in-situ during stretching, there is a resin film characteristic evaluation apparatus described in Patent Document 1. The device described in this document is equipped with a temperature-controllable thermostatic tank, film stretching means installed inside the thermostatic tank and capable of simultaneously stretching a resin film as a specimen along two or more axes, electromagnetic wave irradiation means for irradiating electromagnetic waves to the resin film during stretching, and detection means for detecting the electromagnetic waves transmitted through the resin film. The film stretching means is equipped with a detection means that detects the electromagnetic waves transmitted through the resin film, and while stretching the resin film in a thermostatic tank set at a predetermined test temperature, the characteristics of the resin film are evaluated based on the detection results of the detection means. In the thermostatic tank, a blowing nozzle for blowing out warm air and a suction nozzle for sucking in air from the tank are installed opposite each other with the film stretching means between them.

### Prior Art Document

### Patent Literature

Patent Document 1: Patent Publication No. 2011-095252

### Summary of the Invention

### The Problems to be Solved by the Invention

The apparatus described in Patent Document 1 is designed to attach and detach a resin film to and from stretching means by releasing a lid provided on the top surface of the apparatus. Therefore, when the lid is released to replace the resin film, the air in the thermostatic tank is exchanged with the outside air, and the time required for the inside of the tank to reach the predetermined test temperature becomes longer. In addition, there is a risk of temperature irregularities in the thermostatic tank immediately after the resin film is replaced. In addition, if the temperature is changed in stages and the characteristics of the resin film are evaluated under multiple temperature conditions, the resin film will undergo a process of temperature transitions in the thermostatic tank. In order to avoid the process of temperature transition in the thermostatic tank, the resin film is taken in and out of the stretching test apparatus at each of the multiple temperatures, thus requiring an extended time for evaluation.

The present invention was made in view of the above-mentioned points, and it is an object of the present invention to provide a stretching test apparatus capable of quickly bringing the test space (where the test specimen is stretched) to the test temperature when the specimen is replaced. A further object is to provide a stretching test apparatus capable of quickly bringing the temperature in the thermostatic tank to each test temperature without having to move the test specimen in and out of the apparatus when evaluating the characteristics of a test specimen under multiple temperature conditions by changing the temperature in stages.

### Means for Solving Problems

In order to solve the above problems, the stretching test apparatus of the present invention comprises: an enclosure (2); at least one heating tank (5) provided in the enclosure (2); a pull-out unit (3) that can be moved in and out between a storage position (P) in the enclosure (2) and a take-out position (Q) outside the enclosure (2); a specimen stretching section (4) provided in the pull-out unit (3) capable of holding and stretching a specimen (T); a test space (TS) within the enclosure (2) in which the specimen stretching section (4) is positioned and the specimen (T) is stretched when the pull-out unit (3) is in the storage position (P). When the pull-out unit (3) is in the storage position (P), the heating tank (5) and the test space (TS) are in communication with each other, so that the heated air from the heating tank (5) can flow into the test space (TS). When the pull-out unit (3) is in the take-out position (Q), the heating tank (5) and the test space (TS) are not in communication with each other, and the heated air from the heating tank (5) cannot flow into the test space (TS).

According to the stretching test apparatus, when the take-out unit (3) is in the take-out position (Q) outside the enclosure (2), because the heating tank (5) and the test space (TS) are not communicated with each other and the heated air from the heating tank (5) cannot flow into the test space (TS), only the heating tank (5) can be preheated. Therefore, the temperature of the test space (TS) when the pull-out unit (3) is stored in the storage position (P) can be quickly set to the desired test temperature.

The stretching test apparatus also includes an enclosure (2); at least one heating tank (5) provided in the enclosure (2); a pull-out unit (3) that can be moved in and out between a storage position (P) in the enclosure (2) and a take-out position (Q) outside the enclosure (2); a specimen stretching section (4) provided in the pull-out unit (3) and capable of holding and stretching the specimen (T); a test space (TS) within the enclosure (2) in which the specimen stretching section (4) is positioned and the specimen (T) is stretched when the pull-out unit (3) is in the storage position (P). The pull-out unit (3) includes connecting members (32) for connecting the test space (TS) with the heating tanks (5), and the connecting members (32) are movable back and forth between the pull-out unit (3) side and the heating tank (5) side. When the connecting members (32) protrude to protruding positions on the heating tank (5) side, the gap between the test space (TS) and the heating tank (5) will be blocked by the connecting members (32). When the connecting members (32) are retracted to the retracted position on the pull-out unit (3) side, gap will be opened between the test space (TS) and the heating tank (5).

According to the stretching test apparatus of the present invention, the gap between the heating space and the test space (TS) can be in a closed state when the pull-out unit (3) is in the storage position (P) in the enclosure (2). Therefore, compared to the case where heated air leaks from the gap and diffuses, the test space (TS) in a state where the gap is closed by the connecting members (32) can be set to a uniform test temperature more quickly. In addition, since heated air in the heating space can be prevented from leaking through the gap and diffusing to the surrounding area, adverse effects on components for control or measurement located in the surrounding area due to the diffusion of heated air can be avoided.

The stretching test apparatus of the present invention is such that at least two heating tanks (5) are provided in the enclosure (2), the at least two heating tanks (5a, 5b) are arranged side by side in the second axial direction, and the temperature of each of the at least two heating tanks (5a, 5b) can be set independently. When the pull-out unit (3) is in the storage position (P), at least one of the heating tanks (5a, 5b) can be configured to be connected to the test space (TS) in which the specimen stretching section (4) is positioned, so that heated air from the heating tanks (5a, 5b) can flow into the test space (TS). By this configuration, the heating tank (5) used for the stretching test can be switched between the two heating tanks (5a, 5b) while the specimen stretching section (4) is positioned in the enclosure (2). Therefore, when a stretching test is performed on one specimen (T) at two or more temperatures, the test can be performed without removing the specimen (T) from the enclosure (2). Accordingly, the time required for the stretching test can be reduced.

### Effect of the Invention

According to the stretching test apparatus of the present invention, the test space where the specimen is stretched can be quickly brought to the test temperature when replacing the specimen, and when evaluating the characteristics of the specimen under multiple temperature conditions by changing the temperature in stages, the temperature in the thermostatic tank can be quickly brought to each test temperature without taking the specimen in and out of the apparatus.

### Brief Description of Drawings

Fig. 1A is external view of the stretching test apparatus as an embodiment of the present invention, showing a state in which the pull-out unit is stored in the storage position in the enclosure.
Fig. 1B is an external view of the stretching test apparatus as an embodiment of the present invention, showing a state in which the pull-out unit is taken out of the enclosure to the take-out position.
Fig. 2B is a top view of the pull-out unit of the stretching test apparatus, showing a state in which the distance between the chuck members of the specimen stretching section is at its minimum.

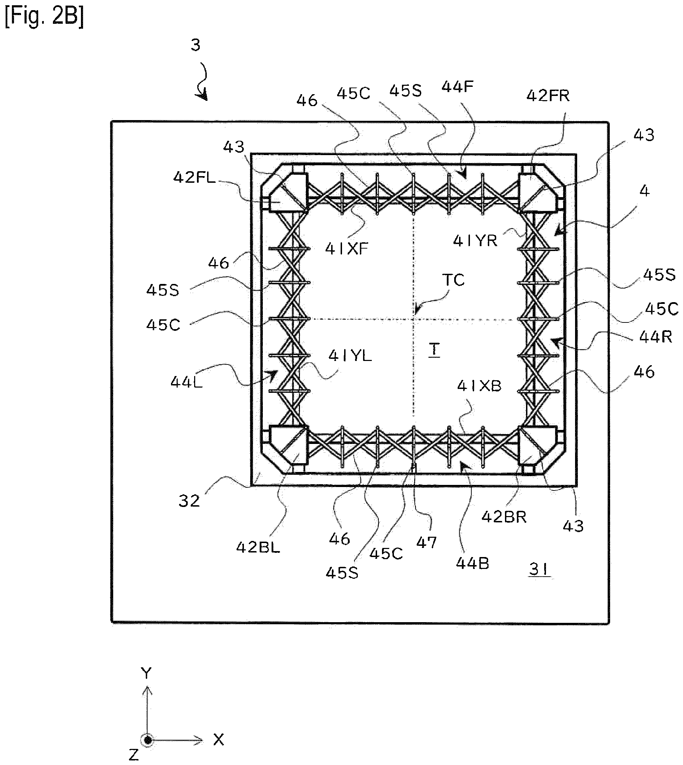

Fig. 2B is a top view of the pull-out unit of the stretching test apparatus, showing a state in which the distance between the chuck members of the specimen stretching section is at its maximum.

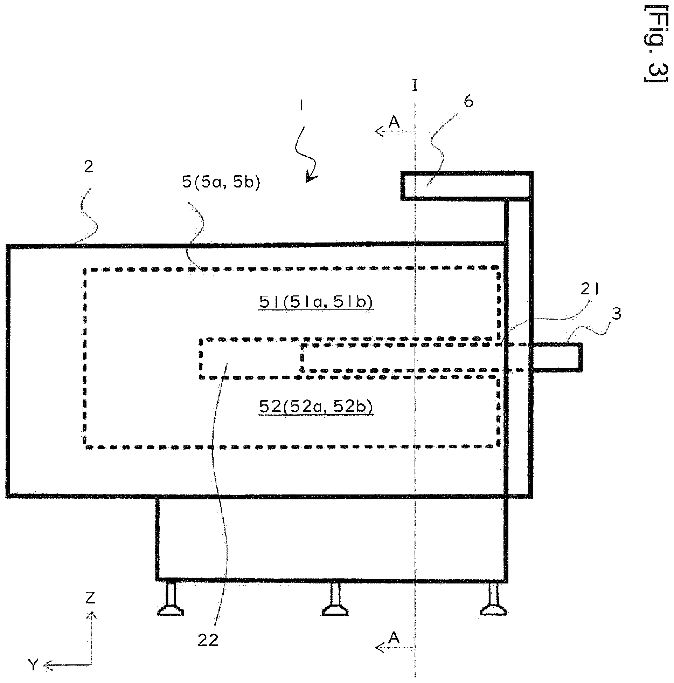

Fig. 3 is a side view of the stretching test apparatus.

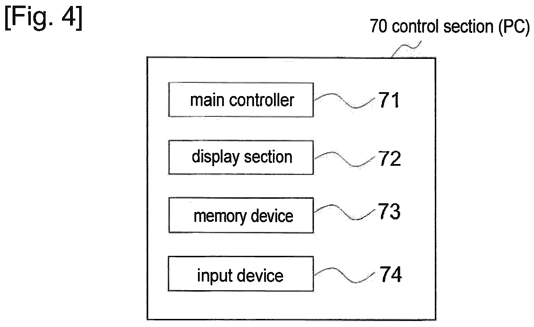

Fig. 4 is a block diagram of a control unit of the stretching test apparatus.

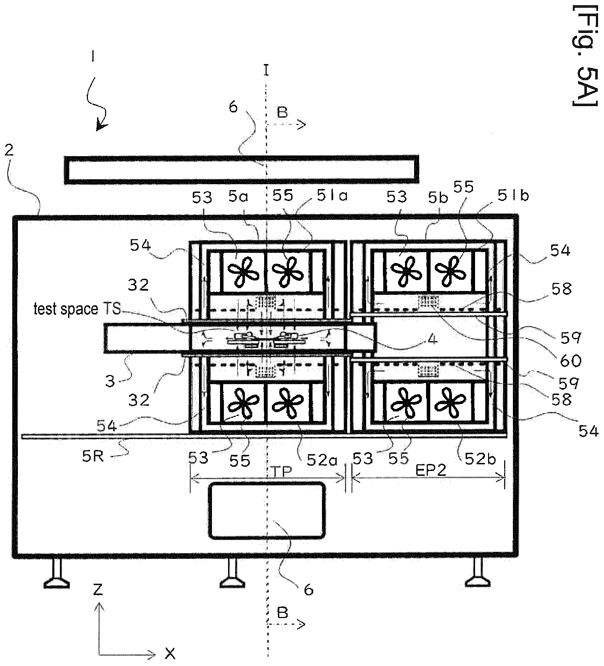

Fig. 5A is a view showing the A-A section of Fig. 3 and the state of the stretching test using the first heating tank.

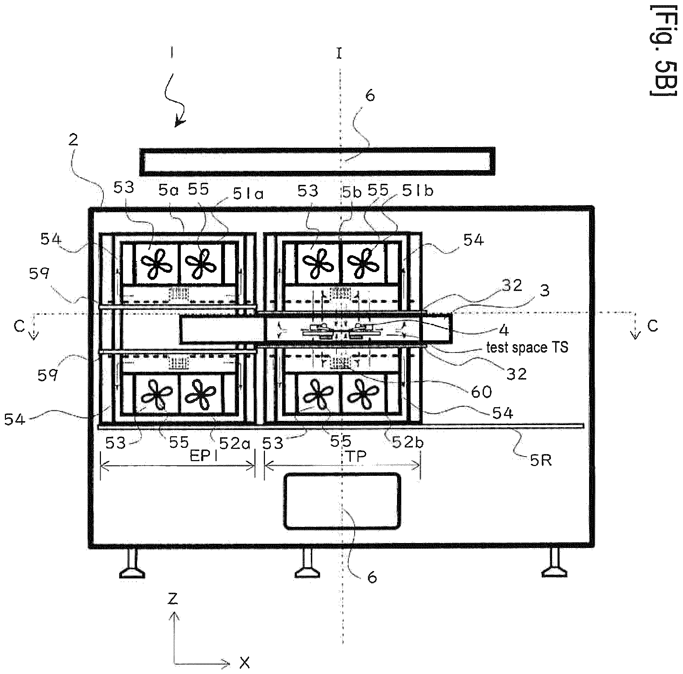

Fig. 5B is an A-A section of Fig. 3, showing the state of a stretching test using the second heating tank.

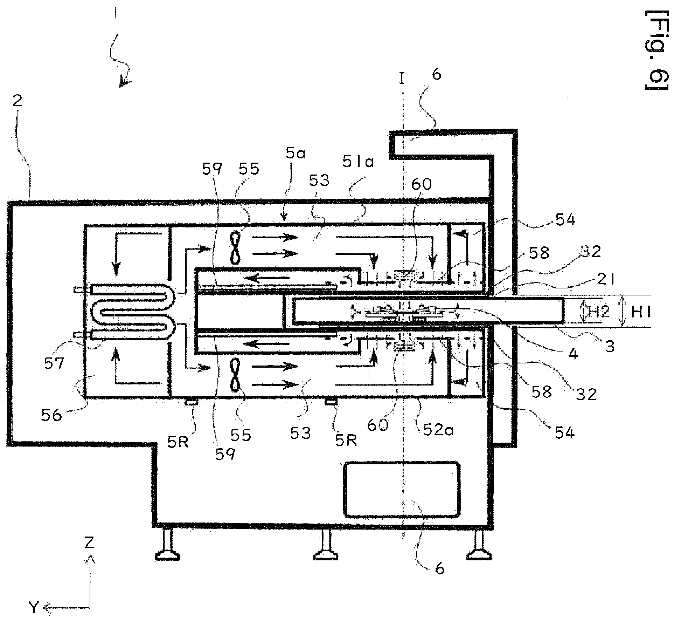

Fig. 6 is B-B section of Fig. 5A.

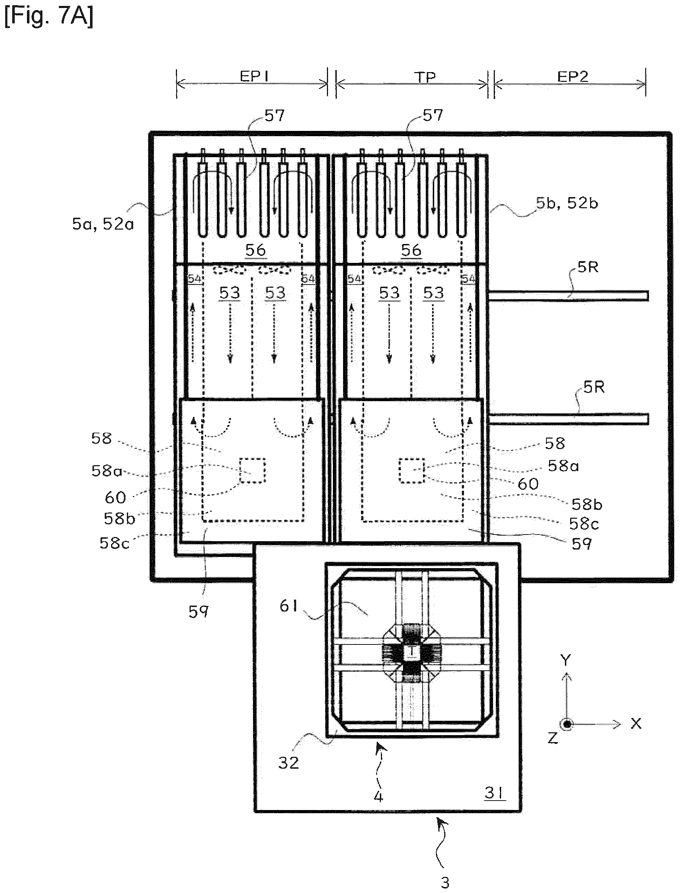

Fig. 7A shows the cross section of the position corresponding to C-C in Fig. 5B, and shows the flow of heated gas when the pull-out unit is being pulled out to perform a stretching test using the second heating tank.

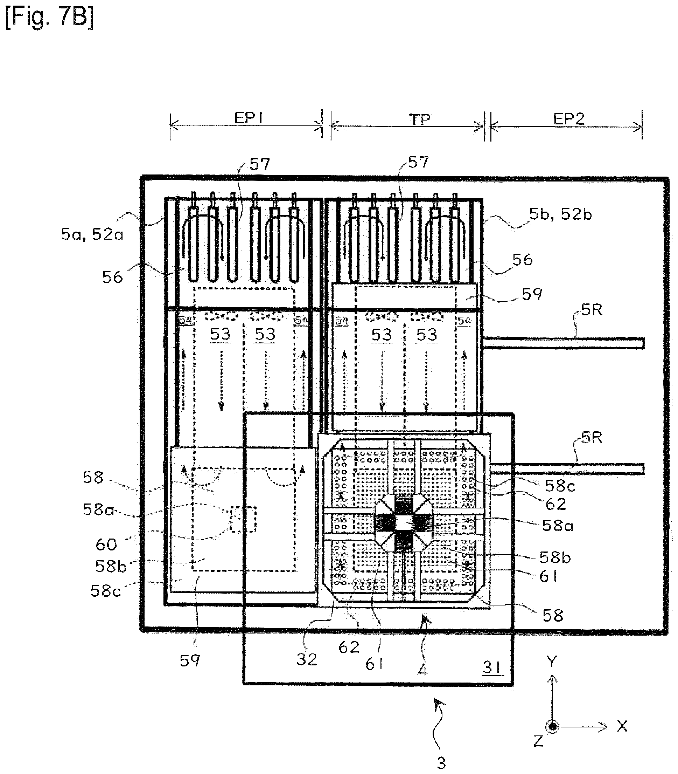

Fig. 7B shows a cross-section of the position corresponding to C-C in Fig. 5B, and illustrates the flow of heated gas when the stretching test is being performed using the second heating tank.

### Embodiments for Carrying out the Invention

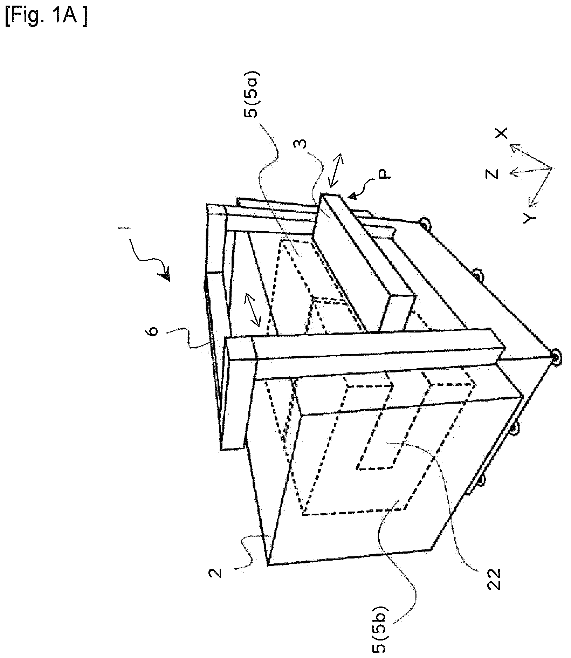

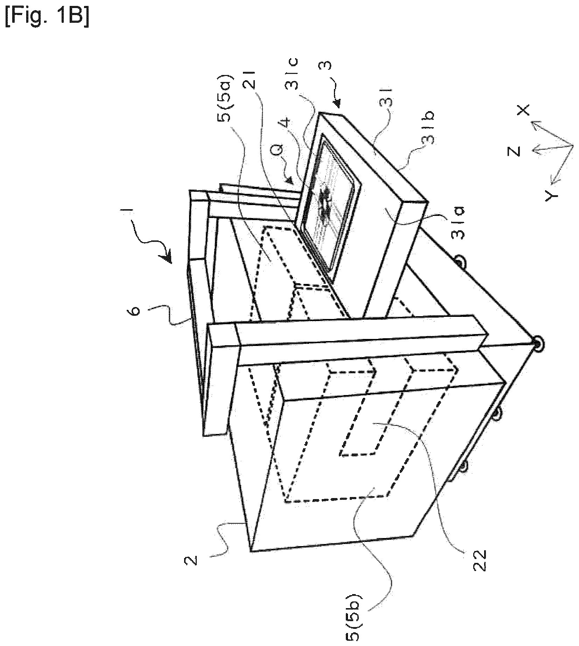

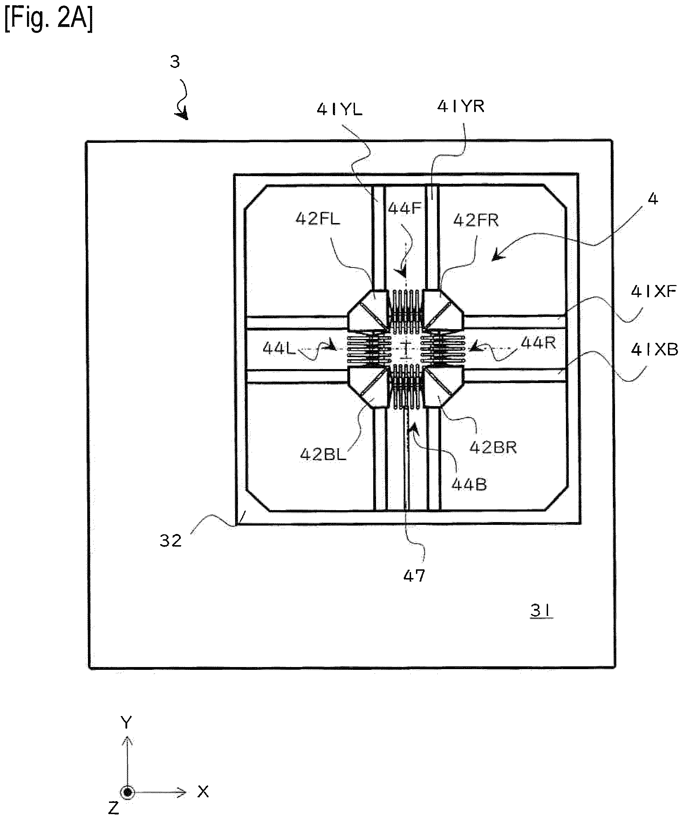

The following is a description of an embodiment of the invention, which is a stretching test apparatus, with reference to the accompanying drawings. Fig. 1 is an external perspective view of the stretch testing apparatus of one embodiment of the invention, and Fig. 1A shows the pull-out unit in a stored position inside the enclosure of the stretch testing apparatus, and Fig. 1B shows a condition where the pull-out unit has been taken out to a taken-out position outside the enclosure of the stretch testing apparatus. Fig. 2 is a top view of the pull-out unit provided in the stretching test apparatus, and Fig. 2A shows a state in which the mutual distance between the chuck members of the specimen stretching section is at a minimum, and Fig. 2B shows a state in which the mutual distance between the chuck members of the specimen stretching section is at a maximum. Fig. 3 shows a side view of the stretching test apparatus.

As shown in these figures, the stretching test apparatus 1 is configured to be suitable for a stretching test on a specimen T of rectangular plate or film shape, and is capable of stretching a specimen T in the biaxial direction and evaluating its characteristics. The stretching test apparatus 1 has: an enclosure 2; a pull-out unit 3 that can be put in and out of the enclosure 2; a specimen stretching section 4 in the pull-out unit 3; a heating tank 5 for heating the specimen in the enclosure 2; a measuring section 6 for measuring the characteristics of the specimen T; and a control section 70 that controls the operation of the stretching test apparatus 1 (see Fig. 4). In the following explanations, as shown in various figures, the left and right directions are referred to as X direction when the stretching test apparatus 1 is installed with its front side (the side with the aperture 21 of enclosure 2 described below) facing toward the front, the front-back direction (toward the front and back) in that state is referred to as Y direction, and the vertical direction in that state is called the Z direction. In the left-right direction, the rightward direction is called +X direction, the leftward direction is called -X direction, the forward and backward direction is called +Y direction, the frontward direction is called -Y direction, the upward direction in the vertical direction is called +Z direction, the downward direction is called -Z direction.

The dashed lines in Fig. 3 show the arrangement of the pull-out unit 3 and heating tank 5 in the enclosure 2. The axis line I extending in Z direction orthogonal to X and Y directions in Fig. 3 indicates a straight line passing through the center TC (see Fig. 2) of the specimen stretching section 4 when the stretching section 4 is positioned for testing. The measuring section 6 is arranged based on the axis I or the center TC of the specimen stretching section 4.

### [Pull-Out Unit]

The pull-out unit 3 has a flat plate-shaped body 31 having a substantially rectangular outline, a rectangular through-hole 31c provided in the body 31, and a specimen stretching section 4 provided inside the through-hole 31c. The through hole 31c in which the specimen stretching portion 4 is located is a through region that penetrates from the upper surface (first surface) 31a to the lower surface (second surface) 31b of the body part 31. In other words, the pull-out unit 3 is a member having a through region that opens in Z direction, and the specimen stretching section 4 is provided within the through region. On the other hand, the front of the enclosure 2 is provided with an opening 21 for inserting and withdrawing the pull-out unit 3 into and out of the enclosure 2, and a storage section 22 consisting of a space extending from the opening 21 along Y-axis direction into the enclosure 2 (at the back of the enclosure 2).

The pull-out unit 3 can be moved in Y direction with respect to the enclosure 2 between a storage position P, which is stored in the storage section 22 within the enclosure 2 shown in Fig. 1A, and a take-out position Q which is out of the enclosure 2 shown in Fig. 1B. Therefore, the pull-out unit 3 can be stored in the storage position P in the enclosure 2 by sliding it in +Y direction, and can be taken out to the take-out position Q outside the enclosure 2 by sliding it in -Y direction. With the unit 3 in the storage position P, the specimen stretching section 4 can be positioned for testing. On the other hand, with the pull-out unit 3 in the take-out position Q, the specimen stretching section 4 can be positioned in the position for replacing the specimen T.

### [Measuring Section]

The stretching test apparatus 1 is equipped with a measuring section 6, which is means for measuring the characteristics of the specimen T by electromagnetic waves. In addition to the measuring section 6, the stretching test apparatus 1 is also equipped with tension measuring means 47 as a measuring means for measuring the characteristics of the specimen T. The details of the tension measuring means 47 will be described below when explaining specimen stretching section 4. The measuring section 6 is equipped with a detection unit that detects electromagnetic waves emitted from the specimen T during stretching. The detection section is also equipped with, for example, a light receiving element, a one- or two-dimensional array of light receiving elements, a camera, or the like, as a configuration for detecting electromagnetic waves. The measurement section 6 can also be configured to include an electromagnetic wave source that emits electromagnetic waves to be incident on the specimen T during stretching. The measuring section 6 is disposed farther away from the specimen stretching section 4 than the heating tank 5. The portion of the heating tank 5 through which the electromagnetic waves (electromagnetic waves for measuring the characteristics of the test specimen T) pass is configured to be able to transmit the electromagnetic waves (for example, a through hole or a window is provided). The output from the measurement section 6 is analyzed by the data analysis section of the control section 70. The specific configuration of the measurement section 6 will be described below.

### [Control Section]

Fig. 4 is a block diagram showing the schematic configuration of the control section provided in the stretching test apparatus. The control section 70 shown in the figure may be a personal computer (PC) or the like. This control section 70 is primarily composed of a main control unit 71, such as CPU, a display unit 72 equipped with a display or other display device, a memory unit 73 consisting of nonvolatile memory or the like, and an input device 74 such as a mouse or keyboard. When the control section 70 is PC, a control program can be installed to cause the PC to function as a control unit that controls the operation of the controlled elements included in the stretching test apparatus 1, specifically, the heating means and air supply means of the heating tank 5, the driving means such as a motor of the specimen stretching section 4, and the like, and the light source unit and light receiving unit of the measurement section 6. The control program operates the controlled elements based on the operating parameters of the stretching test apparatus 1 entered from the input device 74. The control program also acquires outputs from various sensors (not shown) that are provided to monitor the condition of the stretch test apparatus 1, displays these outputs on the display 72, and performs feedback control or feed-forward control of the controlled elements using the outputs. In addition, an analysis program is installed in the PC to acquire the output of the measurement section 6 and to make the PC function as a data analysis section. The analysis program acquires the output of the measurement section 6, analyzes the output of the measurement section 6 using this acquired output and the analysis parameters input from the input device 74, displays the analysis results on the display and stores them in the memory device 73.

### [Specimen Stretching Section]

As shown in Fig. 2, the specimen stretching section 4 includes: four rails 41 (41XF, 41XB, 41YL, 41YR) arranged in a well-digit shape in the through hole 31c of the pull-out unit 3; and sliders 42 (42FL, 42FR, 42BL, 42BR) provided at the four corner portions of the rectangle formed by these four rails respectively. In the same figure, the center of the rectangle formed by the four rails coincides with the center TC of the specimen stretching section 4 (see Fig. 2B). The rails 41XF and 41XB extend in X direction and are parallel to each other. Both ends of rails 41XF and 41XB are supported by a Y-directional spacing adjustment mechanism (not shown) for increasing or decreasing the Y-directional spacing of rails 41XF and 41XB. The Y-direction interval adjustment mechanism is desirably configured to move the rails 41XF and 41XB so that the distances from the center TC of the specimen stretching section 4 to each rail are the same. The rails 41YL and 41YR extend in the Y direction and are disposed parallel to each other. The rails 41YL and 41YR cross the rails 41XF and 41XB at an intersection. Both ends of the rails 41YL and 41YR are supported by an X-direction interval adjustment mechanism (not shown) for increasing or decreasing the interval in the X-direction between the rails 41YL and 41YR. The X-direction interval adjustment mechanism is desirably configured to move the rails 41YL and 41YR so that the distances from the center TC of the specimen stretching section 4 to each rail 41 are the same. The moving speed and moving range of the rails 41 by the X-direction interval adjustment mechanism and the Y-direction interval adjustment mechanism are controlled by the control unit 70.

The slider 42 is provided at a position where the rails 41XF and 41XB and the rails 41YL and 41YR intersect three-dimensionally. The slider 42 is configured to be able to slide on the two rails (one extending in the X direction and the other in the Y direction) that intersect three-dimensionally at the position where it is provided. For example, slider 42FL is provided at the position where rails 41XF and 41YL intersect three-dimensionally. The slider 42FL has a sliding portion in the X direction (e.g., a through hole through which the rail 41XF passes) that can slide on the rail 41XF and a sliding portion in the Y direction (e.g., a through hole through which the rail 41YL passes) that can slide on the rail 41YL. Thus, the distance between the four sliders 42FL, 42FR, 42BL, 42BR can be changed at a desired speed and range by moving the four rails 41 at a desired speed and range by the X-direction spacing adjustment mechanism and Y-direction spacing adjustment mechanism.

The slider 42 is equipped with a chuck section 43 for holding a corner of the specimen T. The chuck section 43 holds the corner of the rectangular specimen T. When the four rails 41 are moved so that the distance between the four sliders 42 increases, the corner part of the rectangular specimen T held by the chuck section 43 is pulled in the direction along the diagonal line of the rectangle formed by the four rails 41 shown in Figs. 2A and 2B. The chuck section 43 is configured to hold tightly against the pull in the direction in which it is extended. For example, the chuck section 43 is configured to be strongly pressed by an elastic member or air pressure between the gripping surfaces that grip the specimen T. The chucking surfaces are provided with uneven surfaces to prevent them from slipping in the pulling direction. Therefore, it is desirable that the four rails are arranged to extend along the diagonal of the rectangle formed by the four rails 41.

A chuck member 44 is provided between adjacent sliders 42 to hold each side of the rectangular specimen T. A plurality (four in this embodiment) of chuck members 44 are provided along each side of the rectangle surrounding the rectangular specimen T so that the chuck members 44 can extend in the biaxial direction. The gripping portions 45 of the four chuck members 44 (44F, 44B, 44L, 44R) are arranged at equal intervals in the X or Y direction so that each side of the rectangular specimen T can be pulled as evenly as possible. For example, each of the chuck members 44 can have five equally spaced gripping sections 45 (the center gripping section 45C and the other gripping sections 45S except the center gripping section 45C).

Each chuck member 44 has a link section 46 with a plurality of links that can extend and retract like a pantograph or magic hand. Each of the plurality of links connects adjacent gripping sections 45 to each other or to the gripping section 45 and the slider 42 adjacent thereto. For example, the link portion 46 of the chuck member 44F has one of these ends connected to the slider 42FL and the other end connected to the slider 42FR. Therefore, when the distance between rails 41YL and 41YR extends and the distance between sliders 42FL and 42FR extends in X direction in Fig. 2, the link portion 46 of chuck member 44F will extend in X direction in Fig. 2. The plurality of gripping portions 45 arranged connected to the link portion 46 of the chuck member 44F can move so that the mutual spacing extends in X direction in Fig. 2. When the spacing of rails 41YL and 41YR is extended, the plurality of gripping sections 45 of chuck member 44B connected to slider 42BL and slider 42BR also move so that their mutual spacing is extended in X direction in Fig. 2. Similarly, as the spacing between rails 41XF and 41XB extends in Y direction in Fig. 2, the mutual spacing of the plurality of gripping portions 45 of chuck member 44L connected to slider 42FL and slider 42BL, and the plurality of chuck member 44R connected to slider 42FR and slider 42BR, will have their mutual spacing of the gripping portions 45 extended in y-direction in Fig. 2.

When the distance between rails 41XF and 41XB extends, the distance between chuck members 44F and 44B also extends, and the rectangular specimen T held by the gripping portions 45 of chuck members 44 is pulled in the Y direction in Fig. 2. When the distance between rails 41YL and 41YR is extended, the distance between chuck members 44L and 44R is also extended, and the rectangular specimen T held in the gripping portion 45 of chuck member 44 will be pulled in X direction in Fig. 2.

The gripping portion 45 is configured to firmly grip the specimen T against the pull in the direction in which it is extended. For example, the gripping portion 45 is configured so that the gripping surfaces that grip the specimen T are strongly pressed against each other by an elastic member or air pressure. The gripping surfaces of the gripping portion 45 are provided with unevenness or the like so that they do not slip in the pulling direction. Therefore, the plurality of gripping portions 45 of the chuck member 44F and the chuck member 44B should be arranged to extend in Y direction, and the plurality of gripping portions 45 of the chuck member 44L and the chuck member 44R should be arranged to extend in X direction.

As shown in Fig. 2A, the centrally located gripping portion 45C in each chuck member 44 is aligned with the center TC of the specimen stretching section 4 in X or Y direction. Therefore, the gripping portion 45C of chuck member 44F and chuck member 44B can move in Y direction but not in X direction. Also, the gripping portions 45C of the chuck member 44F and the chuck member 44B move in the X direction but not in Y direction. As a result, the center region of the specimen T positioned in the center TC region of the specimen stretching section 4 does not move during the stretching process of the specimen T. Therefore, by evaluating the properties in the center region of the specimen T, it is possible to evaluate the change in properties due to stretching at a common position of the specimen T.

It is desirable that a tension measuring means 47, such as a load cell, be provided connected to the gripping portion 45C. The tension measuring means 47 makes it possible to measure the tension applied to the specimen T during stretching. The tension force applied to the specimen T during stretching is a physical quantity necessary to stretch the specimen T by a predetermined amount and is a characteristic value of the specimen T. The tension measuring means 47 here, such as a load cell, is a measuring means for measuring the characteristics of the specimen T being stretched.

### [Heating Tank]

The stretching test apparatus 1 is equipped with two heating tanks 5 including a first heating tank 5a and a second heating tank 5b. The heating tanks 5 will be explained using Figs. 5 - 7. Fig. 5 is an A-A sectional view of Fig. 3, and Fig. 5A shows a state in which a stretching test is being performed using the first heating tank 5a, and Fig. 5B shows a state in which a stretching test is being performed using the second heating tank 5b. The solid arrows in Fig. 5 indicate the flow of heated gas. Fig. 6 is B-B section of Fig. 5A. Fig. 7 shows the cross section of the position corresponding to C-C in Fig. 5B. Fig. 7A shows the flow of heated gas when the pull-out unit is being withdrawn to conduct a stretching test using the second heating tank, and Fig. 7B shows the flow of heated gas during the stretching test using the second heating tank. The dashed lines in Fig. 7 indicate the bulkheads inside the heating tank 5 that demarcate the supply air duct 53 and return air duct 54. The solid arrows indicate the flow of the heated gas at the C-C section position. Further, the dashed arrows indicate the flow of the heated gas in the air supply duct 53 and return air duct 54.

As shown in Figs. 5-7, the two heating tanks 5a, 5b are equipped with an upper (surface) side heating tank 51a, 51b for heating the specimen T from its upper (surface) side and a lower (back) side heating tank 52a, 52b for heating the specimen T from its lower (back) side, respectively. Each of the upper side heating tanks 51 (51a, 51b) and 52 (52a, 52b) has an air supply duct 53, an air return duct 54, an air blowing mechanism 55 as an air supply means, and a punching plate 58 with through holes for blowing out air supplied from the air supply duct 53, and a shutter means 59 that can open and close the through-hole in the punching plate 58.

The upper side heating tank 51 and the lower side heating tank 52 are communicated to the gas heating area 56 (see Fig. 6) shown in Fig. 6 via respective air supply ducts 53 and return air ducts 54. Within the gas heating area 56, a heating unit 57 is provided as a heating means to heat the gas (air) passing through the gas heating area 56. Therefore, the air heated in the gas heating region 56 is led to the upper side heating tank 51 and the lower side heating tank 52, and further supplied from the upper side heating tank 51 and the lower side heating tank 52 to the upper and lower surfaces of the specimen T.

In other words, with the pull-out unit 3 in the retracted position P, the test space TS in the enclosure 2 in which the specimen stretching section 4 is positioned is connected to the heating space, and the specimen T is stretched in such state. In this process, the upper and lower surfaces of the specimen T are heated by the heated air supplied from the upper side heating tank 51 and the lower side heating tank 52, so that the specimen T can be quickly heated to the desired test temperature even when the specimen T is a plate thicker than a film shape.

The air blowing mechanism 55 is provided in the most upstream area of the air supply duct 53. The air blowing mechanism 55 is, for example, an air blowing fan. The air blowing mechanism 55 sucks air heated in the gas heating area 56 (heated air) and blows it downstream. A punching plate 58 and shutter means 59 are provided in the most downstream region of the air supply duct 53. The shutter means 59 is provided adjacent to the punching plate 58.

As shown in Figs. 7A and 7B, the punching plate 58 has: a central first region 58a in which a hollow columnar body 60 is erected toward the upstream side; a second region 58b surrounding the outside of the first region; and a third region 58c surrounding the outside of the second region. As shown in Figs. 6 and Figs. 7A, 7B, the side walls of the hollow columnar body 60 are provided with through holes 61, 62 through which heated air from the upstream side flows inwardly. Therefore, in the first area 58a of the punching plate 58, the heated air rectified in the Z direction by the hollow columnar body 60 is blown out. As shown in Fig. 7B, a number of through holes 61 are provided in an array in the second region 58b of the punching plate 58. These through holes 61 are also through holes for blowing out the heated air from the upstream side. In the third region 58c of the punching plate 58, through holes 62 which are larger in diameter than the through holes 61, are provided in an array. The through holes 62 are connected to the return air duct 54. Therefore, heated air blowing out of the through holes 61 is sucked by the through holes 62 and flows into the return air duct 54.

The shutter means 59 is equipped with a shutter plate that moves back and forth between an open position and a closed position along the Y direction on the upper side or lower side of the punching plate 58, so that it can be switched between an open state in which the through holes 61 in the first region 58a, the second region 58b, and the through holes 62 in the third region 58c of the punching plate 58 are open, and a closed state in which the through holes 61 in the first region 58a, the second region 58b, and the through holes 62 in the third region 58c of the punching plate 58 are closed. This allows the heating tank 5a or the heating tank 5b to be released in a state in which it is positioned in the test position TP. Fig. 7B shows the heating tank 5b positioned in the test position TP and the shutter means 59 of the heating tank 5b being released. The shutter means 59 of the heating tank 5a, which is positioned in the retracted position EP1, is closed. With the pull-out unit 3 in the retracted position in the enclosure 2, the specimen stretching section 4 is positioned in the test space TS, and the specimen T is stretched while the specimen TS is connected to the air supply duct 53 as a heating space. The test space TS in the enclosure 2 faces the first area 58a, the second area 58b, and the third area 58c of the punching plate 58. Therefore, when the shutter means 59 is released with the pull-out unit 3 in the retracted position, the test space TS is connected to the heating space (air supply duct 53) of the heating tank 5 (heating tank 5b in Fig. 7B) and becomes a space where the heated air is distributed. In other words, the shutter means 59 has a function of making the test space TS and the heating space mutually connected when the pull-out unit 3 is in the retracted position. The shutter means 59 also has the function of separating the test space TS and the heating space so that they are not mutually connected.

The center TC of the specimen stretching section 4 coincides with the center of the first region 58a of the punching plate 58. The specimen T held in the chuck member 44 of the specimen stretching section 4 is located in the space opposite the first and second regions of the punching plate 58, during the stretching test in which the specimen T is heated and stretched in the test space TS. During the stretching test, as illustrated in Figs. 5-6 and 7B, heated air blown from the first and second regions 58a and 58b of the punching plate 58 flows in the z-direction toward the specimen T during the stretching test. The heated air that reaches the surface of the specimen T or the specimen stretching section 4 flows from the center to the periphery on the surface of the specimen T. The heated air that reaches the outside of the specimen T or the specimen stretching section 4 is collected from the through hole 62 in the third region 58c. The recovered heated air returns to the gas heating area 56 through the return air duct 54. In other words, the heating tank 5 includes a gas circulation flow path for the heated air supplied from the air supply duct 53 (which is heated in the gas heating area 56 during the stretching test) to return to the gas heating area 56 again via the return air duct 54.

Since the heated air supplied from the air supply duct 53 is collected through the through hole 62 in the third region 58c, only a small amount of the heated air reaches the outside of the through region of the pull-out unit 3. Therefore, the temperature rise of the upper surface 31a and lower surface 31b of the pull-out unit 3 can be suppressed.

When the shutter means 59 is closed, the heated air blown downstream by the air blowing mechanism 55 does not blow out of the punching plate 58, but flows into the return air duct 54 through another flow path (not shown). The heated air that flows into the return air duct 54 returns to the air supply duct 53 through the return air duct 54. In other words, when the shutter means 59 is closed, the heating tank 5 includes a gas circulation flow path in which heated air supplied from the air supply duct 53 returns to the air supply duct 53 again through the return air duct 54.

Before storing the pull-out unit 3 in the storage position P, the shutter means 59 can be closed, the gas heating area 56 can be heated by the heating unit 57 to a predetermined temperature in advance, and the air can be circulated in the gas circulation flow path. In other words, the air in the gas circulation channel can be preheated to a predetermined temperature. This allows the test space TS with the pull-out unit 3 in the retracted position to be quickly set to the desired test temperature. When the test is being performed at the first temperature in the heating tank 5a positioned at the test position TP, the second heating tank 5b positioned at the retracted position EP2 can be preheated to the second temperature. Even when preheating is being performed in heating bath 5b, no heated air leaks from heating tank 5b during preheating because shutter means 59 is closed. Therefore, the heated air leaking from the heating tank 5b during preheating does not adversely affect the test using the first heating tank 5a. Also, energy consumption during preheating can be reduced.

The first heating tank 5a and the second heating tank 5b can be moved in the X direction on the rail 5R within the enclosure 2 by a motor or other known driving means (not shown). The first heating tank 5a and the second heating tank 5b can be positioned at the test position TP for using any one of them for stretching tests, as shown in Figs. 5A, 5B. When a stretching test is performed using the first heating tank 5a, the second heating tank 5b is positioned in the retracted position EP2 as shown in Fig. 5A, and when a stretching test is performed using the second heating tank 5b, the first heating tank 5a is positioned in the retracted position EP1, as shown in Fig. 5B. When the stretching test is performed without using the heating tank 5, the first heating tank 5a and the second heating tank 5b are positioned in the retracted position EP1 and the retracted position EP2, respectively. Therefore, when a stretching test is performed on one specimen T at two or more different temperatures, the test can be performed without removing the specimen T from the enclosure 2. In addition, the time required for the stretching test can be reduced.

### [Connecting Lid]

As shown in Fig. 6, the height (length in the Z direction) of the opening 21 of the enclosure 2 is sufficient for the advancement and retraction of the pull-out unit 3. Specifically, the height H1 of the opening 21 is slightly longer than the distance H2 between the top 31a and bottom 2b of the body 31 of the pull-out unit 3 (H1>H2). A part of the movable space of the pull-out unit 3, extending from the opening 21 into the enclosure 2, is the test space TS in which the specimen T is tested when the pull-out unit 3 is stored in the storage position P. The larger the test space TS is, the longer the time required to set a uniform test temperature in the test space TS. Therefore, when the pull-out unit 3 is placed in the storage position P, the punching plate 58 of the upper side heating tank 51 may be arranged so that the distance between the upper surface 31a of the main unit 31 and the punching plate 58 of the upper side heating tank 51 can be made as small as possible. The same is true for the punching plate 58 of the lower heating tank 52. However, the gap between the top 31a of the body 31 and the punching plate 58 of the top-side heating tank 51, as well as the gap between the bottom 31b of the body 31 and the punching plate 58 of the bottom-side heating tank 52 can become a flow path for heated air to leak into spaces in the enclosure 2 other than the test space TS. If the heated air leaks from those gaps, the heated air may have an adverse effect if the heated air reaches other heating tank (5a or 5b) or other components of the stretching test apparatus 1 located at the retraction position EP1 or the retraction position EP2.

To deal with this problem, a connecting lid (connecting member) 32 is provided inside the through hole 31c. The connecting lid 32 is a rectangular annular member provided inside the through hole 31c along its inner wall, and is provided to make the above gap as small as possible or to seal it when the pull-out unit 3 is in the storage position P. In other words, when the pull-out unit 3 is in the retracted position P, the pull-out unit 3 has an upper connecting lid 32a protruding from the upper surface 31a of the main body 31 toward the punching plate 58 of the upper-side heating tank 51 and a lower connecting lid 32b protruding from the lower surface 31b of the main body 31 toward the punching plate 58 of the lower-side heating tank 52, When the pull-out unit 3 is in a position other than the storage position P, the upper connecting lid 32a and the lower connecting lid 32b can each retract and retract into the through hole 31c, thereby positioning them flush with the upper surface 31a and lower surface 31b of the main body 31. The upper connecting lid 32a and the lower connecting lid 32b are arranged to be close to or in contact with the punching plates 58 of the upper side heating tank 51 and the lower side heating tank 52, respectively, with the pull-out unit 3 in the storage position P. As a result, with the connecting lid 32 protruding to the protruding position on the heating tank 5 side, the gap between the connecting portion connecting the heating tank 5 to the test space TS and the test space TS is closed by the connecting lid 32. As a result, the test space TS becomes a space enclosed by the inner wall of the through hole 31c of the body part 31, the upper connecting lid 32a and the lower connecting lid 32b, the punching plate 58 of the upper side heating tank 51 and the punching plate 58 of the lower side heating tank 52. Furthermore, when the shutter means 59 is opened, the test space TS becomes a space enclosed by the upper connecting lid 32a and lower connecting lid 32b and the like, which are constantly ventilated by heated air (see Figs. 5-6 and 7B). Therefore, it is possible to prevent the heated air from reaching the heating tank 5a or the heating tank 5b positioned at the retracted position EP1 or the retracted position EP2, or the components for control or measurement included in the stretching test apparatus 1. Furthermore, compared to a case where there are gaps through which heated air leaks, the test space TS, which is constantly ventilated, is maintained at a uniform test temperature. In addition, compared to a test space TS in which heated air leaks through gaps and diffuses, the test space TS enclosed by the connecting lid 32 and the like can be quickly set to a uniform test temperature.

### [Measurement Means]

A specific example of the measurement section 6 using electromagnetic waves will be described below. Measurement section 6 has the functions of birefringence phase difference measurement and light scattering observation of the double photo elastic modulation method. As described above, the position of the center region of the specimen T during stretching is invariant. Therefore, it is possible to measure the stretching stress magnification (strain) curve under various stretching setting conditions. The film polarization accuracy can be evaluated by measuring the birefringence phase difference distribution and light scattering observation.

The measurement section 6 includes an optical measurement system with an angle of incidence of 0° and 30° to the central region of the specimen T during stretching for the birefringence phase difference measurement of the double photo elastic modulation method. Each of the aforementioned optical measurement systems for birefringence phase difference measurement has a light source on one side of the Z-axis direction in Figs. 5 and 6 with the specimen T in between, and a light receiving part on the other side. In the light source part for birefringence phase difference measurement, a laser source (for example, a helium-neon laser with a wavelength of 632.8 nm), a polarizer, and a photo elastic modulator are arranged from the distal side of the specimen T in this order. In the light-receiving part for the birefringence phase difference measurement, the analyzer and the photodetector are arranged from the proximal side of the test specimen T in this order. The birefringence phase difference at an incident angle of 0° and the birefringence phase difference at an incident angle of 30° are taken into the data analysis section included by the control unit (not shown). The data analysis section calculates the triaxial orientation during stretching from the inputted birefringence phase difference at an incident angle of 0°, birefringence phase difference at an incident angle of 30°, average refractive index, and film thickness.

The measurement section 6 also includes a light scattering observation measurement system for light scattering observation. In the light scattering observation measurement system, a light source is located on one side of the Z-axis direction in Figs. 5, 6 with the specimen T in between, and a light receiving part is located on the other side. In the light source section for light scattering observation, a laser source (e.g., a helium-neon laser with a wavelength of 632.8 nm), a half-wave plate, and a polarizer are arranged from the distal side of the specimen T in this order. In addition, in the light receiving section for light scattering observation, an analyzer and an imaging device are arranged in this order from the proximal side of the specimen T. The polarizer and the analyzer are installed so that their polarization directions are orthogonal to each other. Therefore, the light incident on the specimen T is scattered by the optical anisotropy of the specimen T during stretching. The spherulite in the specimen T is captured by the above-mentioned imaging device as a four-leaf clover-shaped scattered image. The light scattering observation measurement system enables observation of the spherulite structure of the specimen T and the change in spherulite diameter during stretching.

### [Specific Example of Stretching Test Method]

Next, the stretching test method using the stretching test apparatus 1 configured as described above will be described. The stretching test method described below is a test method for stretching a specimen T in the biaxial direction and evaluating the characteristics of the specimen T. The first heating tank 5a is used to stretch the specimen T in the biaxial direction at T1°C to evaluate the characteristics of the specimen T, followed by using the second heating tank 5b to stretch the specimen T in the biaxial direction at T2°C to evaluate the characteristics of the specimen T.

First, the operating parameters of the specimen stretching section 4, heating tank 5 (first heating tank 5a and second heating tank 5b), and measurement section 6 are input to the control section 70 by an input device. Then, test preparation instructions are input to the control section 70 by the input device 74. For example, the "Prepare for test" button displayed on the display 72 is clicked with the mouse or other input device 74. When the test preparation instruction is entered, the shutter means 59 of the first heating tank 5a and the second heating tank 5b are closed, as shown in Fig. 7A. The first heating tank 5a is positioned in the test position TP. On the other hand, the second heating tank 5b is positioned in the retracted position EP1. The first heating tank 5a and the second heating tank 5b are moved in the +X or -X direction on the rail 5R as necessary for this positioning. In the first heating tank 5a and the second heating tank 5b, hot air heated to T1°C and T2°C, respectively, is circulated through the gas circulation flow path with the pull-out unit 3 not stored in the enclosure 2. This circulation of heated air preheats the heating space (air supply duct 53) of the first heating tank 5a and the second heating tank 5b. When the preheating of the heating space of the first heating tank 5a and the second heating tank 5b is completed, "preheating completed" will be indicated. For example, "preheating completed" is displayed on an unshown indicator on the front side of the enclosure 2 (the side facing the operator) or on the display 72 of the control section 70. This is also true for other indications below.

Next, a rectangular specimen T is prepared, in the form of a film or a plate, with dimensions corresponding to the minimum mutual distance between the chuck members 44 illustrated in Fig. 2A. Then, the pull-out unit 3 is pulled out from the enclosure 2 until the specimen T can be fixed to the specimen stretching section 4. The prepared specimen T is fixed to the chuck 43 and gripping section 45 of the specimen stretching section 4 which has been pulled out.

When testing a specimen T whose distance between the chuck members is larger than the dimension corresponding to the minimum state, or when the dimension of the prepared specimen T is larger than the dimension corresponding to the minimum state, the pull-out unit 3 should be at first withdrawn from the enclosure 2. Then, the dimensions of the specimen T are input to the control unit 70 by means of the input device 74. Once the dimensions of the specimen T are input, the specimen stretching section 4 is set to the specimen set-up state corresponding to the dimensions of the specimen T. The prepared specimen T is fixed to the chuck 43 and gripping section 45 of the specimen stretching section 4 that has been set to the specimen set-up state.

Next, it is confirmed by the display that the first heating tank 5a is in the "preheating completed" state. After confirming that "preheating is completed," the pull-out unit 3 with the specimen T held in the chuck 43 and gripping section 45 is stored in the enclosure 2.

With the pull-out unit 3 stored, the test start instruction is input to the control unit 70 using the input device 74. For example, the "test start" button displayed on the display 72 is clicked with the mouse or other input device 74. When the test start instruction is entered, the shutter means 59 of the first heating tank 5a is opened. At the same time, the shutter means 59 is released, the connecting lid 32 on the top 31a side of the main body part 31 protrudes toward the punching plate 58 (heating space) of the upper side heating tank 51. Further, at the same time, the connecting lid 32 on the lower 31b side of the body part 31 protrudes toward the punching plate 58 (heating space) of the lower heating tank 52). As shown in Fig. 5A, the test space TS in which the specimen stretching section 4 is positioned is thereby surrounded by the inner side wall surrounding the penetration area of the body part 31, the upper side connecting lid 32a and lower side connecting lid 32b, and the punching plates 58 of the upper side heating tank 51 and lower side heating tank 52, and are constantly ventilated by heated air.

After a predetermined time has elapsed, a substantial stretching test of the specimen T using the first heating tank 5a is started. The four rails 41 in the specimen stretching section 4, which are arranged in a well-shaped arrangement, can move so that the mutual distance between the four sliders 42 in the specimen stretching section 4 in the X and Y directions will increase. As a result, as shown in Fig. 2B, the rectangular specimen T is pulled and stretched outward on its four sides and corners so that the dimensions of its four sides are extended.

The tension applied to the specimen T during stretching is measured by the tension measuring means 47. The output of the tension measuring means 47 is taken into the data analysis unit of the control section 70 and stored in the memory device 73 of the control section 70. The output of the tension measuring means 47 can also be displayed on the display unit 72 of the control section 70.

The central area of the specimen T during stretching is measured by the measuring section 6, which has the functions of birefringence phase difference measurement and light scattering observation of the double photo elastic modulation method. The output of the measurement section 6 can also be displayed on the display unit 72 of the control section 70. The output of the measuring section 6 is analyzed by the data analysis unit sequentially or at an appropriate time (such as when the stretching test is completed). The analysis results are displayed on the display unit 72 of the control section 70 and stored in the memory device 73.

When the stretching of the specimen T in the first heating tank 5a is completed, "First heating tank test completed" is displayed. At the same time, both connecting lids 32, which were in contact with the punching plate 58, are immersed into the through hole 31c, so that they are flush with the upper surface 31a or the lower surface 31b of the body section 31. When the connecting lids 32 are immersed into the through holes 31c, the shutter means 59 of the first heating tank 5a is closed. The first heating tank 5a is then positioned in the retracted position EP1. On the other hand, the second heating tank 5b is positioned in the test position TP. The first heating tank 5a and the second heating tank 5b are moved in +X or -X direction on the rail 5R as necessary for this positioning.

Next, when the second heating tank 5b is "preheating completed", the shutter means 59 of the second heating tank 5b is opened. Meanwhile, the shutter means 59 is released, the connecting lid 32 on the top 31a of the main body 31 protrudes toward the punching plate 58 of the top-side heating tank 51. At the same time, the connecting lid 32 on the lower side 31b of the main body part 31 protrudes toward the punching plate 58 of the lower side heating tank 52. As shown in Figs. 5B and 7B, the test space TS in which the specimen stretching section 4 is positioned is surrounded by the inner side wall surrounding the penetration area of the body 31, the connecting lids 32 on the upper and lower sides, and the punching plates 58 of the upper side heating tank 51 and lower side heating tank 52, forming a space being constantly ventilated by heated air.

After a predetermined time has elapsed, a substantial stretching test of the specimen T using the second heating tank 5b may be started. The substantial stretching test of the specimen T using the second heating tank 5b proceeds in the same manner as the substantial stretching test of the specimen T using the second heating tank 5a, so that we omit the related explanation here.

When the stretching of the specimen T in the second heating tank 5b is completed, "second heating tank test completed" is displayed. At the same time, both connecting lids 32, which were in contact with the punching plate 58, are immersed into the through hole 31c. When the connecting lids 32 are immersed into the through holes 31c, the shutter means 59 of the second heating tank 5a is closed.

When the shutter means 59 of the second heating tank 5a is closed, "All tests completed" will be displayed. When "all tests completed" is displayed, the pull-out unit 3 will be removed from the enclosure 2 to prepare for the next test of the specimen.

### [Modified Embodiments (Variants)]

The stretching test apparatus and stretching test method of the above embodiments can be simplified or advanced variants. The simplified or advanced variants are described below. The parentheses in the description of the following variations are reference information indicating the components of the stretching test apparatus, which merely indicate that the components in the variations are functionally common, and do not indicate that the components in the variations are identical in arrangement or structure to the components of the stretch testing apparatus of the above embodiments.

The stretching test apparatus is capable of switching the heating tank (5) to a state in which the air supply duct (53) as the heating space and the test space (TS) in the enclosure (2) are fluidly connected or not fluidly connected (hereinafter referred to as "configuration A"), while the pull-out unit (3) is pressed into the enclosure (2). In such a state, it is possible to include any one of the following configurations, i.e., the pull-out unit (3) is provided with a connecting lid (32) for connecting the heating space and the test space (TS) (hereinafter, this may be referred to as "configuration B"). Both of the aforementioned configuration A and configuration B are means for "quickly bringing the test space in which the test specimen is stretched to the test temperature at the time of specimen replacement". Further, the shutter means (59), which is a specific means of the configuration A, and the connecting lid (32) in the configuration B are both for connecting the heating space and the test space (TS) when the pull-out unit (3) is pushed into the enclosure (2).

The number of heating tanks (5) is not limited to be two tanks, but may be only one or three or more. If each heating tank (5) is provided with at least the above configuration A, it is possible to preheat the heating space prior to stretching the specimen (T) in fluid communication with the heating space, as the heating space and the test space (TS) are not in fluid communication, and the test space (TS) can be quickly set to a uniform test temperature. Also, if each heating tank (5) is provided with at least the above configuration B, the test space (TS) enclosed by the connecting lid (32) can be quickly set to a uniform test temperature compared to the test space (TS) where heated air leaks from the gap and diffuses.

The heating tank (5) is particularly desirable, but not limited to, having an upper side heating tank (51) for heating the specimen (T) from the first side of the specimen (T) and having a lower side heating tank (52) for heating the specimen (T) from the second side of the specimen (T). The heating tank (5) may have any one of the upper side heating tank (51) and the lower side heating tank (52). The upper side heating tank (51) and the lower side heating tank (52) may each have a gas heating area (56). In this case, the heating tank (5) should be provided with connections interconnecting the upper side heating tank (51) and the lower side heating tank (52), so that the upper side heating tank (51) and the lower side heating tank (52) can move integrally on the rail (5R).

The shutter means (59) need not be provided adjacent to the punching plate (58) in the downstream-most area of the air supply duct (53). For example, the shutter means (59) may be installed in the middle region of the air supply duct (53). In such a case, the shutter means (59) is configured to allow fluid connection between the air supply duct (53) and the return air duct (54) when the fluid connection is not established by the shutter means (59).

Further, it may be possible for the heating tank (5) to move from the test position (TP) to the retracted position (EP1/EP2) even when there is only one heating tank (5). Using this configuration, the heating tank (5) can be evacuated to the retracted position (EP1/EP2) when the area around the test position (TP) is maintained. Further, it is also possible to perform the stretching test at room temperature as the first test temperature with the heating tank 5 evacuated to the retracted position (EP1/EP2), and then position the heating tank 5 set to the second test temperature at the test position (TP) to perform the stretching test at the second test temperature.

The gas heating area (56) is not limited to the upstream area of the air supply duct (53), but can be provided at any location in the air supply duct (53) or return air duct (54) as long as it does not interfere with the evaluation of the characteristics of the specimen (T). Moreover, the gas heating area (56) is not limited to only one, but multiple gas heating areas may be provided in multiple locations. In addition, at least one heating element (57) may be provided in the gas heating area (56). Besides, the heating element (57) can be of a known type, such as a resistance heating type and an infrared heating type.

The air blowing mechanism (55) can be installed anywhere in the air supply duct (53) or return air duct (54), without being limited to the upstream area of the air supply duct (53), as long as it does not interfere with the evaluation of the characteristics of the specimen (T). Further, the air blowing mechanism (55) is not limited to only one, but may be provided in plurality in multiple locations. Moreover, at least one heating element (57) may be provided in the gas heating area (56). In addition, it is also possible to use an air blowing mechanism (55) which can be a propeller fan, a sirocco fan, or any other known type of fan.

The punching plate (58) is particularly, but not exclusively, provided with a central first area (58a) on which the hollow columnar body (60) is erected, a second area (58b) surrounding the outer side of the first area and arranged with through holes (61), and a third area (58c) surrounding the outer side of the second area (58b) and arranged with through holes (62). The first region (58a) may be a region without the hollow columnar body (60) and with an array of through holes. In such case, the first region (58a) may be configured in the same manner as the second region (58b), or the diameter or arrangement of the through holes may be different. The second region (58b) may not surround the first region (58a) if it is provided outside of the first region (58a). The third region (58c) may not enclose the second region (58b) if it is provided outside of the second region (58b). For example, the third region (58c) may be provided on both sides of the second region (58b).

The heating tank (5) may be equipped with an air supply duct (53) that supplies heated air to the specimen (T) on the first side of the specimen (T) and, also has an air return duct (54) that collects air which has passed through the specimen (T) on the second side of the specimen (T). In this configuration, the air supply duct (53) as a heating space and the test space (TS) in the enclosure 2 can be switched between a fluid-connected state and a non-fluid-connected state. For example, the system is configured to allow a switching between a bypass flow path that allows direct fluid connection between the air supply duct (53) and the return air duct (54), and a test flow path in which heated air supplied from the air supply duct (53) is collected in the return air duct (54) via the test space (TS). In such heating tank, it is desirable to provide a punching plate (58) in the downstream-most region of the air supply duct.

The frame-like pull-out unit body (31) that the pull-out unit (3) has may be provided with cooling means capable of cooling the pull-out unit body (31) to room temperature. The cooling means may be arranged to cool the outer surface of the pull-out unit body (31) (the first surface, second surface, inner and outer walls surrounding the penetration area and the like) immediately before or immediately after the pull-out unit (3) is withdrawn from the enclosure (2). This configuration allows the specimen (T) to be replaced quickly and safely.

Cooling means capable of cooling the specimen stretching section (4) to room temperature may be provided in the specimen stretching section (4) itself, the main body of the pull-out unit (31), or other enclosure (2). By cooling the specimen stretching section (4) immediately before or immediately after the pull-out unit (3) is withdrawn from the enclosure (2), the specimen (T) can be replaced quickly and safely. The chuck member (44) of the specimen stretching section (4) is suitable for the above embodiment, but any other known chuck member can be used instead.

In the above embodiments, the stretching test apparatus (1) equipped with the first heating tank (5a) and the second heating tank (5b) can perform the following stretching test in addition to the above "specific examples of stretching test". For example, in the case of a stretching test of two or more specimens in succession, the first heating tank (5a) and the second heating tank (5b) can be used alternately, and while a stretching test of a specimen is being conducted in the first heating tank (5a), preheating for a stretching test of the next specimen can be conducted in the second heating tank (5b). In such a case, the parameters for the stretching test may be entered for each stretching test of each specimen, or they may be entered collectively before the first stretching test.

Though the embodiments of the present invention have been described above, the invention is not limited to the above embodiments, but can be varied within the scope of the claims and the technical ideas described in the specification and drawings.

## Claims

1. A stretching test apparatus, comprising:
an enclosure;
at least one heating tank provided within the enclosure;
a pull-out unit that can be moved in and out between a storage position inside the enclosure and a take-out position outside the enclosure;
a specimen stretching section installed in the pull-out unit and capable of holding and stretching a specimen; and
a test space within the enclosure in which the specimen stretching section is positioned and the specimen is stretched when the pull-out unit is in the storage position;
wherein when the pull-out unit is in the storage position, the heating tank and the test space are communicated together to allow heated air to flow from the heating tank into the test space;
wherein when the pull-out unit is in the take-out position, the heating tank and the test space are not communicated with each other, so that the heated air from the heating tank cannot flow into the test space.

2. The stretching test apparatus according to 1, including:
a communication part that communicates from the heating tank to the test space; and
a shutter means for opening and closing the communication part,

3. The stretching test apparatus according to claim 1 or 2, wherein
the pull-out unit is provided with connecting members for connecting the test space to the communication portion or the heating tank;
the connecting members can be moved back and forth between the pull-out unit side and the communication part or the heating tank side;
when the connecting members protrude to the protruding position on the communication portion or the heating tank side, the gap between the test space and the communication part or the heating tank is closed by the connecting members,
when the connecting members are retracted to the retracted position on the pull-out unit side, the gap between the test space and the communication part or the heating tank is opened.

4. A stretching test apparatus, comprising:
an enclosure;
at least one heating tank provided within the enclosure;
a pull-out unit that can be moved in and out between a storage position inside the enclosure and a take-out position outside the enclosure;
a specimen stretching section installed in the pull-out unit and capable of holding and stretching the specimen; and
a test space inside the enclosure where the specimen stretching section is positioned and the specimen is stretched when the pull-out unit is in the storage position,
wherein
the pull-out unit is provided with connecting members for connecting the test space with the heating tank;
the connecting members can be moved back and forth between the pull-out unit side and the heating tank side;
when the connecting members protrude to the protruding position on the heating tank side, the gap between the test space and the heating tank is closed by the connecting members;
when the connecting members are retracted to the retracted position on the pull-out unit side, the gap between the test space and the heating tank is opened.

5. The stretching test apparatus according to any one of claims 1 to 4, wherein
the pull-out unit is movable in the first axial direction;
the heating tank is movable in the second axial direction orthogonal to the first axis within the enclosure.

6. The stretching test apparatus according to any one of claims 1 to 5, wherein
at least two heating tanks are provided within the enclosure;
at least two heating tanks are arranged side-by-side in the second axial direction;
each of the at least two heating tanks is independently temperature-settable; and
when the pull-out unit is in the storage position, the at least any one of the heating tanks is communicated to the test space in which the specimen stretching section is positioned, so that heated air from the heating tanks can flow into the test space.

7. The stretching test apparatus according to any one of claims 1 to 6, wherein
the heating tank is equipped with an air supply duct, a return air duct, air supply means, heating means for heating air, a punching plate having a first through-hole for blowing out air supplied from the air supply duct, and an air circulation channel through which air supplied from the air supply duct returns to the air supply duct again via the return air duct,
heated gas supplied from the air supply duct and blown out through the first through-hole of the punching plate can flow into the return air duct after heating the specimen held in the specimen stretching section.

8. The stretching test apparatus according to claim 7, wherein
the punching plate further has a second through-hole that is communicated to the return air duct; and
heated gas supplied from the air supply duct and blown out through the first through-hole in the punching plate can flow into the return air duct through the second through-hole in the punching plate after heating the specimen held in the specimen stretching section.

9. A stretching test apparatus according to claims 1 to 8, wherein
the specimen is a plate or film-like body;
the heating tank has an upper side heating tank for heating the upper side of the specimen and a lower side heating tank for heating the lower side of the specimen.

10. A stretching test apparatus according to claims 1 to 9, wherein
the specimen is a plate-shaped material or film like material with a rectangular outer shape; and
the specimen stretching section has a plurality of chuck members configured to be stretchable and arranged so that each of them forms a side of a polygon, and has a plurality of sliders supporting both ends of two chuck members forming adjacent sides of the polygon and capable of sliding movement.

11. The stretching test apparatus as claimed in any one of claims 1 to 10, further comprising:
a measuring means for measuring the characteristics of the specimen being stretched by the specimen stretching section,
wherein
the measuring means is provided with a detection unit to detect electromagnetic waves emitted from the specimen;
the heating tank is provided with a window through which the electromagnetic waves can pass;
the detection unit is positioned more distal from the specimen stretching section than the heating tank and detects the electromagnetic waves emitted from the specimen and passing through the window.
